# EUROPÄISCHE PATENTSCHRIFT

(11) **EP 0 774 351 B1**
(45) Veröffentlichungstag und Bekanntmachung des Hinweises auf die Patenterteilung: **21.04.2004**
(21) Anmeldenummer: 96117304.4
(22) Anmeldetag: 28.10.1996
(51) Int. Cl.: B32B 31/08, B31F 5/00, H01T 19/04

(54) **Vorrichtung zum elektrostatischen Fixieren eines mehrlagigen Flachmaterials**
Apparatus for electrostatically setting multiple layer sheet material
Appareil pour fixer électrostatiquement un produit plat multi-couche

(30) Priorität: 27.10.1995 DE 29517139 U
(43) Veröffentlichungstag der Anmeldung: 21.05.1997
(73) Patentinhaber: Dettke, Hubertus, 22946 Trittau (DE); Dettke, Christa, 22946 Trittau (DE)
(72) Erfinder: Dettke, Hubertus, 22946 Trittau (DE); Dettke, Christa, 22946 Trittau (DE)
(74) Vertreter: Patentanwälte Hauck, Graalfs, Wehnert, Döring, Siemons, Schildberg

(56) Entgegenhaltungen:
- EP-A- 0 301 179
- DE-A- 3 146 826
- DE-U- 9 400 931
- FR-A- 2 220 380
- GB-A- 967 174
- US-A- 3 462 909

## Beschreibung

Die Erfindung bezieht sich auf eine Vorrichtung zum elektrostatischen Fixieren eines mehrlagigen Flachmaterials nach dem Oberbegriff des Anspruches 1.

Eine erfindungsgemäße Vorrichtung soll ein mehrlagiges Flachmaterial zumindest vorübergehend für eine Bearbeitung fixieren, so daß die Lagen nicht gegeneinander verrutschen bzw. sich in Falten legen können. So kann die Vorrichtung bei der Spanplattenproduktion für die Fixierung einer Laminatschicht auf einer Spanplatte vor deren inniger Verbindung in einer Presse zum Einsatz kommen. Ein bevorzugtes Einsatzfeld ist die Papierverarbeitung, z.B. die Tapetenproduktion und vor allem die Drucktechnik.

Die Fixierung der Papierstränge in der Drucktechnik ist besonders kritisch, weil hier mit sehr hohen Geschwindigkeiten gearbeitet wird. Dies gilt besonders für die Produktion von Zeitungen und Zeitschriften. Die mit hoher Geschwindigkeit in den Falzapparat an einer Tiefdruckmaschine einlaufenden Papierstränge neigen zum Verrutschen und zur Faltenbildung. Dies kann zu einem unsauberen Falzen und Schneiden des zusammengeführten Papierstranges im Falzapparat führen.

Deshalb weist der Falzapparat regelmäßig eine auch als Stranghaftung bezeichnete Vorrichtung auf, welche den Papierstrang aus mehreren Lagen Flachmaterials elektrostatisch fixiert. Hierzu ist die Stranghaftung in der Regel mit einem Paar Aufladeelektroden versehen und wird der Papierstrang vor dem Falzen bzw. Schneiden durch einen Durchlaufspalt zwischen den Elektroden geführt. An den Elektroden liegt eine Hochspannung (z.B. ± 45 kV) an, so daß sich im Durchlaufspalt ein elektrisches Feld hoher Feldstärke ausbildet. Das elektrische Feld bewirkt eine Aufladung der durchlaufenden Papierbahnen, so daß deren Schichten aneinander haften und an einem Verrutschen im Falzapparat gehindert sind.

Aus dem DE-GM 94 00 931 ist bereits eine Vorrichtung der eingangs erwähnten Art bekannt, die eine Elektrodeneinrichtung mit mindestens einer Aufladeelektrode aufweist, deren Erstreckung in Breitenrichtung des Flachmaterials einstellbar ist. Durch Einstellen der Elektrodenerstreckung in Breitenrichtung des Flachmaterials ist eine genaue Anpassung an die Breite des Flachmaterials möglich. Hierdurch kann sichergestellt werden, daß ein elektrisches Feld praktisch nur im Durchlaufbereich des Flachmaterials und nicht in materialfreien Randbereichen ausgebildet ist. Ein erhöhter Stromfluß in papierfreien Bereichen und eine damit verbundene Verminderung der Feldstärke im Durchlaufbereich des Papieres sowie Beeinträchtigung der elektrostatischen Fixierung wird hierdurch vermieden.

Bei hohen Durchlaufgeschwindigkeiten des Flachmaterials kann es bei den bekannten Stranghaftungen immer noch zu einem Verrutschen einzelner Papierlagen kommen. Dies ist insbesondere bei Einsatz von Reclyclingpapier der Fall, das gegenüber reinen Papiersorten eine erhöhte Leitfähigkeit bei erheblich schwankender Papierqualität hat. Ferner kann die Stranghaftung in Produktionen unzureichend sein, bei denen ein besonders großer Zeitabstand zwischen der elektrostatischen Fixierung und einer anschließenden Heftung oder sonstigen Verbindung der Papierlagen gegeben ist. Eine unzureichende Fixierung verhindert eine korrekte Verbindung der Papierlagen und kann dazu führen, daß erhebliche Teile der Produktion ausgesondert werden müssen. Ein weiterer, insbesondere optisch störender Effekt einer unzureichenden Fixierung sind die sogenannten "Schlagecken", d.h. umgefaltete Eckbereiche einzelner oder mehrerer Blätter des geschnittenen Materials.

Davon ausgehend liegt der Erfindung die Aufgabe zugrunde, eine Vorrichtung der eingangs genannten Art mit einer verbesserten elektrostatischen Fixierung der Lagen Flachmaterial zu schaffen, die eine ausreichende Fixierung auch bei hohen Durchlaufgeschwindigkeiten, Einsatz von Papiersorten stark schwankender Qualität und über längere Zeiträume bewirkt.

Die Aufgabe wird durch eine Vorrichtung mit den Merkmalen des Anspruches 1 gelöst. Vorteilhafte Ausgestaltungen der Vorrichtung sind in den Unteransprüchen angegeben.

Bei den herkömmlichen Stranghaftungen wiesen die Aufladeelektroden in Durchlaufrichtung des Flachmaterials nur eine geringe Anzahl hintereinander angeordneter Nadeln auf. Infolgedessen konnte das Flachmaterial das zwischen den Aufladeelektroden ausgebildete elektrische Feld in sehr kurzer Zeit durchlaufen. Diese Zeit verringert sich mit steigender Durchlauf- und Produktionsgeschwindigkeit. Die Erfindung zielt darauf ab, das durchlaufende Papiermaterial möglichst lange dem elektrostatischen Feld auszusetzen. Hierzu sieht sie Aufladeelektroden vor, die in Durchlaufrichtung des Flachmaterials eine Vielzahl hintereinander angeordneter Nadeln haben, so daß die Erstreckung des elektrischen Feldes in Durchlaufrichtung des Flachmaterials gegenüber herkömmlichen Vorrichtungen beträchtlich vergrößert ist. Die Erstreckung des mit Nadeln besetzten, aktiven Bereichs der Aufladeelektroden in Durchlaufrichtung des Flachmaterials beträgt mindestens 0,05 m. Bei einer praktischen Ausführung beträgt die Erstreckung 0,25 m. Die Erstreckung des aktiven Bereichs der Aufladeelektroden in Durchlaufrichtung kann im wesentlichen der Breite des Flachmaterials entsprechen oder größer als diese sein. Bevorzugt ist die Erstreckung des aktiven Bereichs der Aufladeelektroden in Durchlaufrichtung so groß, daß bei gegebener elektrischer Leistung, Nadeldichte und Anordnung der Aufladeelektroden sowie gegebener Durchlaufgeschwindigkeit die beim Durchlauf auf das Flachmaterial übertragene Ladung dieses bei nachfolgenden Transport-, Lagerungs- und Bearbeitungsvorgängen sicher fixiert. Mit einer erfindungsgemäßen Vorrichtung wird auch bei hohen Durchsatzgeschwindigkeiten, stark wechselnden Papierqualitäten und über lange Zeiten eine sichere elektrostatische Fixierung erreicht, die ein korrektes Verbinden mehrerer Papierlagen unter Vermeidung von Schlagecken ermöglicht.

Die Aufladeelektroden überdecken mit ihren aktiven Bereichen die beiden Randbereiche des Flachmaterials, weil diese für die gesamte Fixierung des mehrlagigen Flachmaterials ausschlaggebend sind. Dabei ist die Mindestbreite in den Randbereichen jeweils 0,05 m. Wenn die Aufladeelektroden mit den aktiven Bereichen die gesamte Breite des Flachmaterials überdecken, wird die elektrostatische Fixierung weiter verbessert. Zwecks Aufwandsminderung können jedoch in vielen Fällen die Aufladeelektroden in den Randbereichen des Flachmaterials eine größere Feldstärke als im Mittelbereich des Flachmaterials haben, ohne das Ergebnis wesentlich zu verschlechtern.

Bei einer weiteren Ausgestaltung sind mehrere längliche Aufladeelektroden auf mindestens einer Seite des Flachmaterials nebeneinander angeordnet, so daß sie in Längs- und Querrichtung des Flachmaterials jeweils die gewünschte Erstreckung haben. Dabei kann auf Aufladeelektroden mit einer aktiven Länge von 0,25 m und/oder einer aktiven Breite von 0,033 m zurückgegriffen werden. Die Aufladeelektroden haben eine Nadeldichte von mindestens 0,5 Nadeln pro cm². Bevorzugt liegt die Nadeldichte in einem Bereich von etwa 1 bis 3 Nadeln pro cm². Die Aufladeelektroden haben bevorzugt eine Dichte der Nadeln von etwa 2 Nadeln pro cm².

Für eine flächendeckende Aufladung des Flachmaterials insbesondere in den Randbereichen ist es günstig, wenn die länglichen Aufladeelektroden zumindest über den Randbereich des Flachmaterials parallel nebeneinander angeordnet sind. Noch vorteilhafter ist es, die länglichen Aufladeelektroden zumindest in den Randbereichen des Flachmaterials parallel zu dessen Durchlaufrichtung auszurichten. Im Mittelbereich des Flachmaterials kann eine reduzierte Feldstärke ausreichen, so daß die diesen zugeordneten Aufladeelektroden zur Durchlaufrichtung des Flachmaterials geneigt sein können. Hierdurch können Aufladeelektroden eingespart werden.

Die Produktion kann unterschiedliche Anforderungen an Ausführung, Zahl und Anordnung der Aufladeelektroden stellen.

Bei einer vorteilhaften Ausgestaltung sind deshalb die Aufladeelektroden in einer dem jeweiligen Flachmaterial, insbesondere dessen Breite, anpaßbaren Art, Zahl und Anordnung auf einem dem Durchlaufbereich zugeordneten Träger befestigt. Für eine einfache Anpassung der Stranghaftung an geänderter Produktionsverhältnisse kann mindestens ein Schlitten quer zur Durchlaufrichtung des Flachmaterials entlang einer Führung des Trägers verschieblich sein und mindestens eine Aufladeelektrode tragen. Auf dem Schlitten kann mindestens eine parallel zur Durchlaufrichtung ausgerichtete und/oder mindestens eine zur Durchlaufrichtung geneigte Aufladeelektrode angeordnet sein. Für eine Anpassung der geneigten Elektrode an die Breite des Flachmaterials kann der Schlitten mit einer Einrichtung zur Veränderung des Neigungswinkels der Aufladeelektrode ausgestattet sein. Für eine Breitenanpassung können ferner mindestens zwei Aufladeelektroden relativ zueinander quer zur Durchlaufrichtung des Flachmaterials verstellbar sein und einen quer zur Durchlaufrichtung veränderlichen Überlappungsbereich haben. Die Verstellbarkeit kann durch Anbringung von Elektroden auf Schlitten verwirklicht sein. Im Überlappungsbereich können die Elektroden komplementäre Formen haben, z.B. Anschrägungen, Nuten und Federn bzw. Stufen. Die Überlappung garantiert, daß unabhängig von der Breiteneinstellung über die gesamte Breite hinweg ein elektrisches Feld erzeugt wird. Ferner kann der Schlitten Arretierungseinrichtungen zur Fixierung seiner Position auf der Führung bzw. des eingestellten Neigungswinkels haben.

Bei symmetrischer Ausbildung kann die Vorrichtung auf beiden Seiten des Flachmaterials entsprechende Aufladeelektroden entsprechender Anzahl und entsprechender Anordnung aufweisen. Ferner kann auf mindestens einer Seite des Flachmaterials eine flächige Aufladeelektrode angeordnet sein, deren Breite der Breite des Flachmaterials in Querrichtung und deren Länge der Längserstreckung in Durchlaufrichtung des Flachmaterials entspricht. Bevorzugt ist die flächige Aufladeelektrode auf nur einer Seite des Flachmaterials angeordnet und weist in Querrichtung die Breite des Flachmaterials mit der maximal zu verarbeitenden Breite auf. Auf der gegenüberliegenden Seite des Flachmaterials kann sich dann eine Elektrodeneinrichtung anpaßbarer Breite befinden. Hierdurch läßt sich der Aufwand für die Elektroden und deren Einstellung unter Vermeidung ungünstiger Randeffekte vermindern.

Gemäß einer weiteren Ausgestaltung sind jedem Paar Aufladeelektroden, die zwischen sich das durchlaufende Flachmaterial aufnehmen, zwei gesonderte Hochspannungsgeneratoren zugeordnet. Bei dem Paar kann es sich auch um eine längliche Aufladeelektrode auf der einen Seite und eine flächige Aufladeelektrode auf der anderen Seite handeln, wobei die flächige Aufladeelektrode mehreren länglichen Aufladeelektroden zugeordnet ist. Dies verbessert die Betriebssicherheit, weil bei Ausfall eines Hochspannungsgenerators unter verminderter Leistung weiterproduziert werden kann. Außerdem ist ein einzelner Hochspannungsgenerator leichter ersetzbar und preiswerter als die gesamte Hochspannungsversorgung. Bei geeigneter Dimensionierung kann ein Hochspannungsgenerator auch zwei Paare Aufladeelektroden kostengünstig versorgen. Eine verbilligte Ausführung kann der einen Aufladeelektrode jedes Elektrodenpaars ein positives oder ein negatives Hochspannungspotential und der anderen Aufladeelektrode ein Massepotential liefern. Die gegenüber Hochspannungsversorgungen mit positiven und negativen Hochspannungspotential gegebene Potentialminderung wird durch die verbesserte Ausrichtung des elektrischen Feldes auf das Flachmaterial mehr oder weniger ausgeglichen.

Die Aufladeelektroden können zwischen einem Paar Steilzugwalzen und einem Paar Sandwich-Walzen angeordnet sein. Bisweilen ist dazwischen jedoch nicht der erforderliche Platz gegeben. Dann können die Aufladeelektroden erfindungsgemäß auch zwischen zwei Paaren Sandwich-Walzen angeordnet sein. Die Aufladeelektroden können auch oberhalb einer Strangzusammenführung von Teilsträngen (bestehend aus mehreren zusammengeführten Lagen) angeordnet sein. Bevorzugt sind dabei zwischen den Teilsträngen des Flachmaterials Masseelektroden und auf der Außenseite des einen Teilstranges eine Aufladeelektrode mit positivem und auf der Außenseite des anderen Teilstranges eine Aufladeelektrode mit negativem Potential angeordnet. Wenn im weiteren Verlauf des Prozesses die Teilstränge zusammengeführt, geschnitten, ggfs. gesammelt und gefalzt werden, werden besonders gute Haftungsergebnisse erzielt. Die Aufladeelektroden können überdies oberhalb einer Sandwich-Walze positioniert sein.

Ausführungsbeispiele der Erfindung sind in den Zeichnungen dargestellt und werden im folgenden näher beschrieben. In den Zeichnungen zeigen:
- Fig. 1: eine Stranghaftung im Falzapparat einer Druckmaschine in grobschematischer Darstellung;
- Fig. 2: eine Stranghaftung mit parallel in Durchlaufrichtung des Flachmaterials angeordneten Elektroden in Vorderansicht;
- Fig. 3: eine Stranghaftung mit parallel in Durchlaufrichtung sowie zur Durchlaufrichtung geneigten und an einem Träger fixierten Elektroden in Vorderansicht;
- Fig. 4: eine Stranghaftung mit parallel in Durchlaufrichtung sowie zu dieser geneigt ausgerichteten und auf Schlitten angeordneten Aufladeelektroden in Vorderansicht;
- Fig. 5: Anordnungsmöglichkeiten der Aufladeelektroden in einer Stranghaftung mit zwei Paaren Sandwich-Walzen in grobschematischer Darstellung.

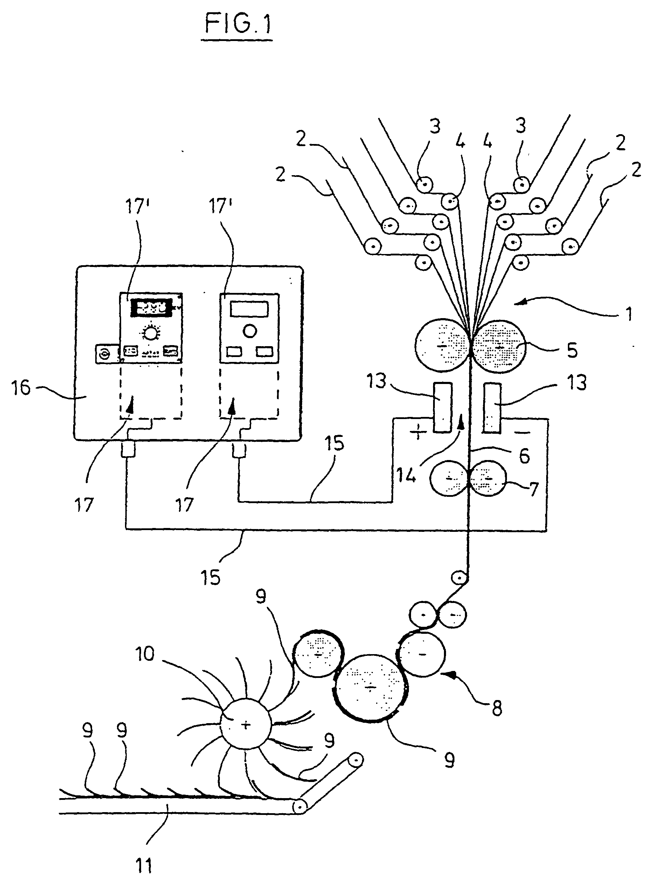

Gemäß Fig. 1 hat der Falzapparat einen Einführbereich 1, in dem verschiedene Papierstränge 2 über Papierleitwalzen 3, 4 geführt und zwischen zwei Sandwich-Walzen 5 zu einem Strang 6 zusammengeführt werden.

Der Strang 6 wird durch ein weiteres Führungswalzenpaar 7 einer Schneideinrichtung 8 in bekannter Ausführung zugeführt. Die Abschnitte 9 des Papierstranges werden in ebenfalls bekannter Weise über einen Auslegestern 10 auf einen Ausleger 11 übertragen.

Die Durchlaufgeschwindigkeit des Papierstranges zwischen den Walzenpaaren 5 und 7 kann zwischen etwa 0 und 20 m pro Sekunde betragen. Die Strangbreite variiert typischerweise zwischen 150 und 800 mm.

Zwischen den Walzenpaaren 5 und 7 ist eine elektrostatische Stranghaftung 12 mit Paaren Aufladeelektroden angeordnet, von denen vereinfachend nur ein Paar Aufladeelektroden 13 eingezeichnet ist. Die Paare Aufladeelektroden 13 sind voneinander beabstandet, so daß zwischen ihnen ein Durchlaufbereich 14 für den Papierstrang 6 ausgebildet ist.

Die Aufladeelektroden 13 sind über Hochspannungskabel 15 mit einer Hochspannungsversorgung 16 verbunden, die für jedes Elektrodenpaar zwei austauschbare Hochspannungsgenerator 17 mit einem Kontrollfeld 17' enthält. Ein Hochspannungsgenerator 17 liefert eine positive und der andere eine negative Spannung.

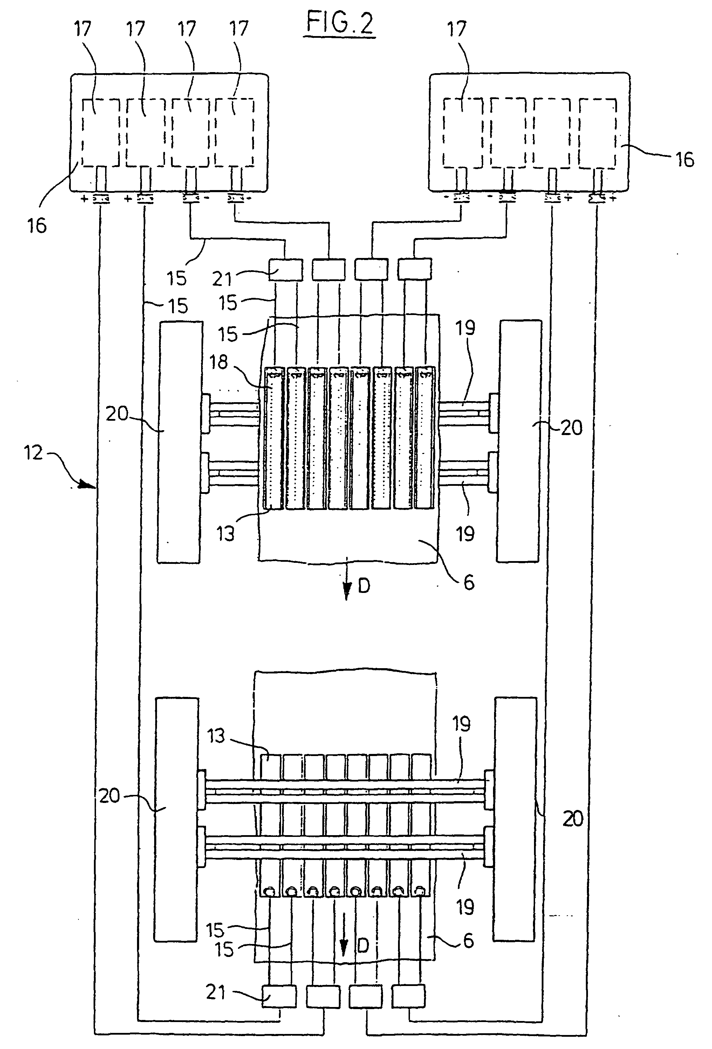

Die nachfolgend erläuterten Fig. 2 bis 4 zeigen verschiedene Stranghaftungen, die bei 12 in der Fig. 1 eingesetzt werden können. In den Fig. 2 bis 4 sind die auf beiden Seiten des Flachmaterials 6 angeordneten Aufladeelektroden 13 jeweils in Vorderansicht und übereinander dargestellt. Tatsächlich sind sie jedoch bezüglich der Zeichenebene auf gleicher Höhe angeordnet und senkrecht zu dieser deckungsgleich aufeinander ausgerichtet.

Gemäß Fig. 2 sind auf jeder Seite des in Durchlaufrichtung D durchlaufenden Flachmaterials acht längliche Aufladeelektroden 13 angeordnet. Die Aufladeelektroden auf jeder Seite sind parallel und mit ihrer Längsachse in Durchlaufrichtung D ausgerichtet. An ihren Längsseiten liegen sie satt aneinander an.

Die Aufladeelektroden 13 haben jeweils eine Breite von 4 cm und decken damit insgesamt ein Flachmaterial 6 mit einer Breite von 29 cm quer zur Durchlaufrichtung D im wesentlichen ab. Jede Aufladeelektrode 13 hat eine Länge von 25 cm, so daß eine entsprechende Abdeckung des Flachmaterials 6 in Durchlaufrichtung D gegeben ist.

Jede Aufladeelektrode 13 hat fünf parallele Reihen Nadeln 18, die jeweils um einen halben Nadelabstand zueinander versetzt angeordnet sind. In jeder Reihe sind etwa 30 Nadeln 18 angeordnet.

Die Aufladeelektroden 13 sind an Trägern 19 in Form von Profilstangen fixiert, die ihrerseits seitlich am Maschinengerüst 20 befestigt sind. In Anpassung an das durchlaufende Flachmaterial 6 kann die Anordnung und Anzahl der Aufladeelektroden 13 auf den Trägern 19 geändert werden.

Jeweils vier Hochspannungsgeneratoren 17 sind in einem gemeinsamen Gehäuse 16 der Hochspannungsversorgung untergebracht. Jeder Hochspannungsgenerator versorgt über Hochspannungskabel 15 und Verteiler 21 zwei nebeneinander auf einer Seite des Flachmaterials 6 angeordnete Aufladeelektroden 13.

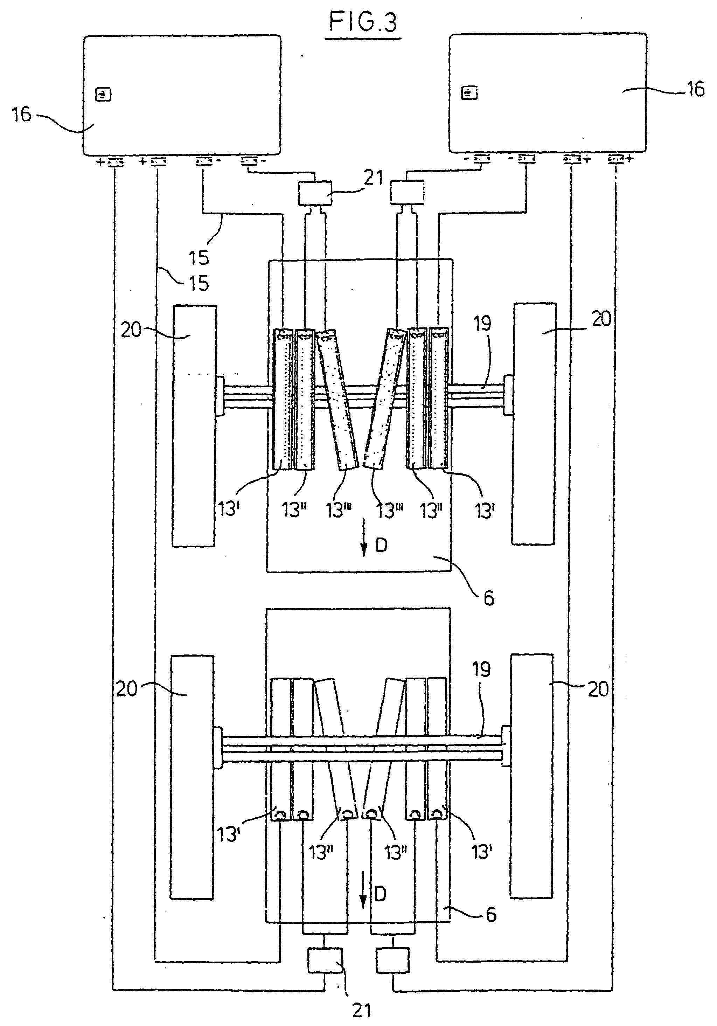

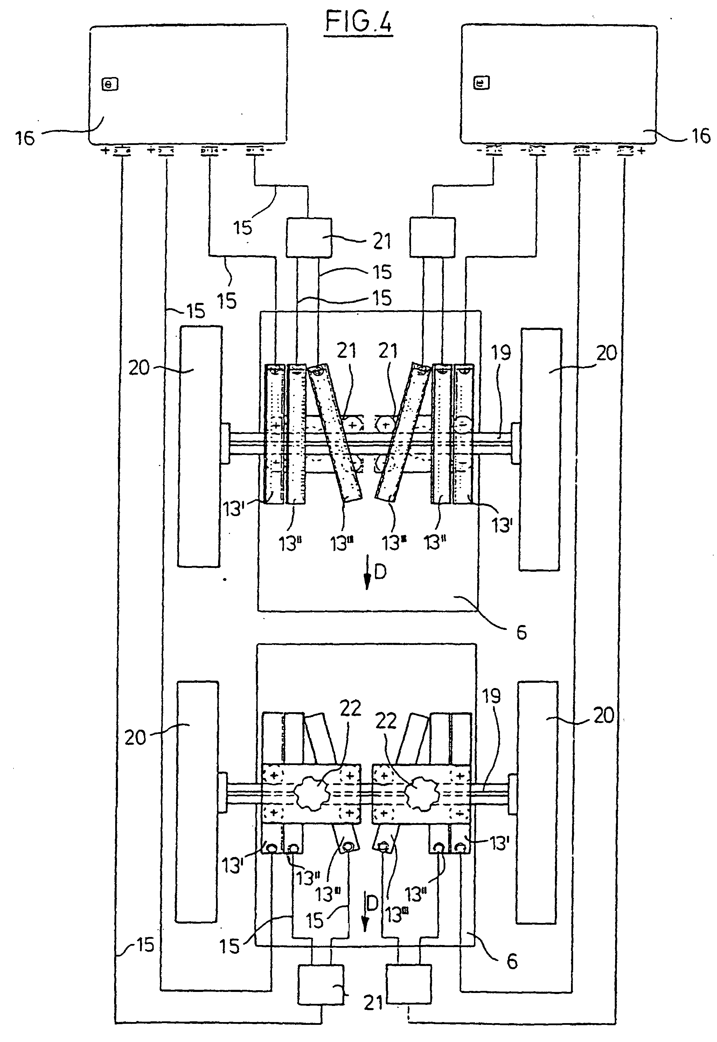

Bei dieser Stranghaftung 12 wird eine gleichmäßige elektrische Feldstärke über den gesamten Elektrodenbereich erreicht. Bei den Stranghaftungen gemäß Fig. 3 und 4 wird hingegen in den beiden Randbereichen des durchlaufenden Flachmaterials 6 eine größere Feldstärke als in dessen Mittelbereich erzielt.

Hierzu sind in beiden Ausführungsbeispielen über den Randbereichen auf beiden Seiten jeweils zwei Aufladeelektroden 13' der oben beschriebenen Art mit ihren Längsachsen in Durchlaufrichtung D ausgerichtet plaziert. Über dem Mittelbereich des Flachmaterials 6 sind auf beiden Seiten zwei der genannten Aufladeelektroden 13'' mit ihren Längsachsen in einem spitzen Winkel zur Durchlaufrichtung D geneigt angeordnet.

In beiden Fällen ist zum Halten der Sätze Aufladeelektroden 13', 13'' auf jeder Seite des Flachmaterials 6 nur ein Träger 19 zwischen den Maschinengestellen 20 fixiert. Gemäß Fig. 3 sind die Aufladeelektroden 13', 13'' direkt auf den Trägern 19 befestigt, wobei ihre Plazierung, Anzahl und Ausrichtung an die Produktionsverhältnisse anpaßbar ist.

Gemäß Fig. 4 sind die Aufladeelektroden 13', 13'' auf Schlitten 21 befestigt, die entlang der Führungen bildenden Träger 19 verschiebbar und auf diesen mittels Arretierungsschrauben 22 arretierbar sind. Hierdurch kann eine Anpassung an die Breite des Flachmaterials 6 erzielt werden.

Überdies weisen die Schlitten 21 Einrichtungen zum Verstellen des Neigungswinkels der Aufladeelektroden 13'' zur Durchlaufrichtung D des Flachmaterials 6 auf. Mittels dieser - nicht abgebildeten - Einrichtungen sind die Aufladeelektroden 13'' so einstellbar, daß sie den Mittelbereich des Flachmaterials 6 weitgehend überbrücken.

Die Fig. 3 und 4 veranschaulichen, daß die Stärke des elektrischen Feldes im Mittelbereich des Flachmaterials mit zunehmendem Neigungswinkel der Aufladeelektroden 13'' zur Durchlaufrichtung D abnimmt. Für viele Anwendungen kommt man jedoch mit einem Feld reduzierter Stärke über den Mittelbereich des Flachmaterials 6 aus. Der Vergleich mit der Fig. 2 zeigt, daß hierdurch Aufwand für Aufladeelektroden 13 und deren elektrische Versorgung eingespart wird.

Auch bei den Ausführungsbeispielen der Fig. 3 und 4 hat die Hochspannungsversorgung zwei Gehäuse 16 mit jeweils vier Hochspannungsgeneratoren. Zwei der Hochspannungsgeneratoren jeder Hochspannungsversorgung speisen über Hochspannungskabel 15 nur das jeweils äußere Paar Aufladeelektroden 13'. Zwei weitere Hochspannungsgeneratoren speisen über Hochspannungskabel 15 und Verteiler 21 jeweils eine innere Aufladeelektrode 13'' und eine benachbarte Aufladeelektrode 13'''. Damit wird ebenfalls dem reduzierten Feldstärkebedarf über dem Mittelbereich und dem erhöhten Feldstärkebedarf über dem Randbereich des Flachmaterials 6 entsprochen.

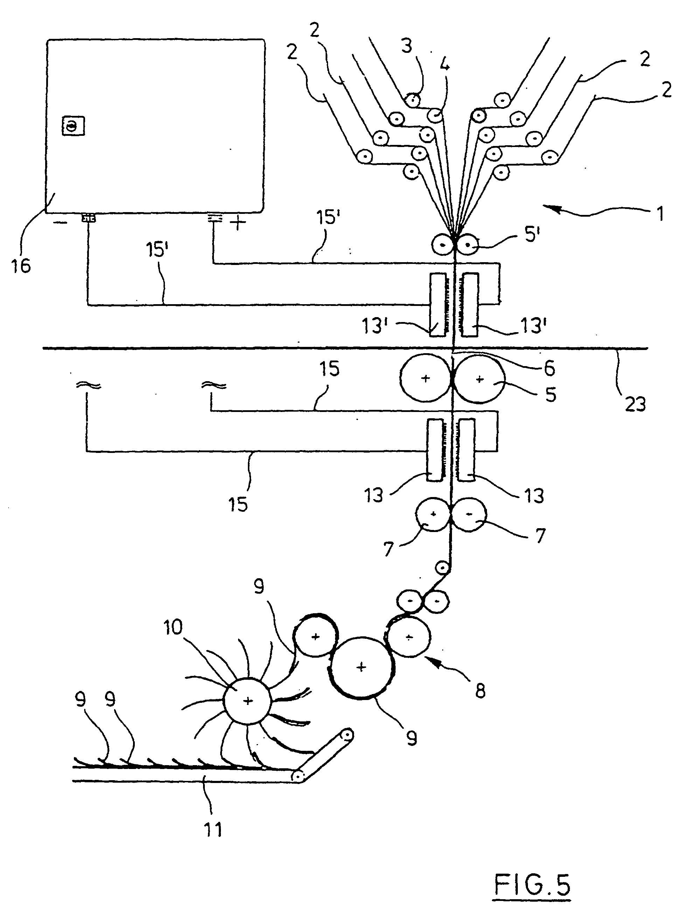

Die Stranghaftung gemäß Fig. 5 entspricht im wesentlichen derjenigen gemäß Fig. 1. Im Umfange der Überstimmungen sind identische Bezugsziffern eingetragen und wird auf obige Erläuterungen verwiesen.

Diese Stranghaftung hat oberhalb einer Zwischendecke 23 und unterhalb eines Wendeaufbaues mit Papierleitwalzen 3, 4 ein weiteres Paar Sandwich-Walzen 5', welche die Papierstränge 2 zu einem Strang 6 zusammenführen. Unterhalb der Zwischendecke 23 wird der Strang 6 durch ein größeres Paar Sandwich-Walzen 5 entsprechend Fig. 1 geführt. Darunter verläuft der Strang 6 durch ein Steilzugwalzen- oder Führungswalzenpaar 7, um von dort in die Schneideinrichtung 8 zu gelangen.

Falls unterhalb der Zwischendecke 23 genügend Platz ist, sind die Aufladeelektroden 13 zwischen den Sandwich-Walzen 5 und dem Führungswalzenpaar 7 angeordnet. Anderenfalls sind die Aufladeelektroden 13' oberhalb der Zwischendecke 23 unterhalb des weiteren Paares Sandwich-Walzen 5' positioniert. Dort ist vielfach für die in Durchlaufrichtung eine beträchtliche Erstreckung aufweisenden Aufladeelektroden 13' genügend Platz. Außerdem hat diese Anordnung den Vorteil, daß der Strang 6 nach Aufladung nochmals durch die Sandwich-Walzen 5 zusammengepreßt wird, wodurch Lufteinschlüsse entweichen, und eine Rückstellung des Papiers aufgrund der bereits vorhandenen Ladung sicher verhindert wird. Diese Anordnung begünstigt somit die sichere Fixierung des Flachmaterials.

## Patentansprüche

1. Vorrichtung zur elektrostatischen Fixierung eines mehrlagigen Flachmaterials (6) mit Aufladeelektroden (13) auf beiden Seiten eines Durchlaufbereichs (14) des Flachmaterials (6) und einer mit den Aufladeelektroden (13) verbundenen Hochspannungsversorgung (6), **dadurch gekennzeichnet, daß** die Aufladeelektroden (13) eine Vielzahl hintereinander angeordnete Nadeln (18) in Durchlaufrichtung (D) des Flachmaterials (6) haben, daß die Erstreckung des mit Nadeln (18) besetzten Bereichs der Aufladeelektroden (13) in Durchlaufrichtung (D) des Flachmaterials mindestens 0,05 m beträgt, daß die Aufladeelektroden (13) mit ihren mit Nadeln (18) besetzten Bereich quer zur Durchlaufrichtung (D) des Flachmaterials (3) zumindest über jeweils 0,05 m der beiden Randbereiche des Flachmaterials (3) erstreckt sind, und daß die Dichte der Nadeln (18) der Aufladeelektroden (13) mindestens 0,5 Nadeln pro cm² beträgt.

2. Vorrichtung nach Anspruch 1, **dadurch gekennzeichnet, daß** die Aufladeelektroden (13) mit ihrem mit Nadeln (18) besetzten Bereich die gesamte Breite des Flachmaterials (6) im wesentlichen überdecken.

3. Vorrichtung nach Anspruch 1 oder 2, **dadurch gekennzeichnet, daß** die Aufladeelektroden (13) in den Randbereichen des Flachmaterials (6) eine größere Feldstärke als die Mittelbereich des Flachmaterials (6) erzeugen.

4. Vorrichtung nach einem der Ansprüche 1 bis 3, **dadurch gekennzeichnet, daß** mehrere Aufladeelektroden (13) auf mindestens einer Seite des Flachmaterials (6) nebeneinander angeordnet und mit ihrer Längsachse in Durchlaufrichtung des Flachmaterials (6) erstreckt sind.

5. Vorrichtung nach Anspruch 4, **dadurch gekennzeichnet, daß** der mit Nadeln (18) besetzte Bereich der länglichen Aufladeelektroden (13) etwa 0,25m lang und/oder etwa 0,33m breit ist.

6. Vorrichtung nach den Ansprüchen 1 bis 5, **dadurch gekennzeichnet, daß** die Dichte der Nadeln (18) der Aufladeelektroden (13) etwa 1 bis 3, vorzugsweise 2 Nadeln pro cm² beträgt.

7. Vorrichtung nach einem der Ansprüche 4 bis 6, **dadurch gekennzeichnet, daß** die länglichen Aufladeelektroden (13) zumindest über den Randbereichen des Flachmaterials (6) parallel nebeneinander angeordnet sind.

8. Vorrichtung nach einem der Ansprüche 4 bis 7, **dadurch gekennzeichnet, daß** die länglichen Aufladeelektroden (13) zumindest über den Randbereichen des Flachmaterials (6) mit ihren Längsachsen in Durchlaufrichtung (D) des Flachmaterials (6) ausgerichtet sind.

9. Vorrichtung nach einem der Ansprüche 4 bis 8, **dadurch gekennzeichnet, daß** die länglichen Aufladeelektroden (13) zumindest über den Mittelbereich des Flachmaterials (6) zu dessen Durchlaufrichtung (D) geneigt sind.

10. Vorrichtung nach einem der Ansprüche 1 bis 9, **dadurch gekennzeichnet, daß** die Aufladeelektroden (13) in einer der Breite des Flachmaterials (6) anpaßbaren Ausführung, Zahl und Anordnung auf einem dem Durchlaufbereich (14) zugeordneten Träger (19) befestigt sind.

11. Vorrichtung nach Anspruch 10, **dadurch gekennzeichnet, daß** mindestens ein Schlitten (21) quer zur Durchlaufrichtung (D) des Flachmaterials (6) entlang einer Führung des Trägers (19) verschiebbar ist und mindestens aus eine Aufladeelektrode (13) trägt.

12. Vorrichtung nach Anspruch 11, **dadurch gekennzeichnet, daß** der Schlitten (21) mindestens eine parallel zur Durchlaufrichtung (D) ausgerichtete und/oder mindestens eine zur Durchlaufrichtung (D) geneigte Aufladeelektrode (13', 13") trägt.

13. Vorrichtung nach Anspruch 12, **dadurch gekennzeichnet, daß** der Schlitten (21) mindestens eine zur Durchlaufrichtung (D) geneigte Aufladeelektrode (13") mittels einer Einrichtung zur Veränderung des Neigungswinkels der Aufladeelektrode (13") zur Durchlaufrichtung (D) trägt.

14. Vorrichtung nach einem der Ansprüche 10 bis 13, **dadurch gekennzeichnet, daß** mindestens zwei Aufladeelektroden relativ zueinander quer zur Durchlaufrichtung (D) des Flachmaterials (6) verstellbar sind und einen quer zur Durchlaufrichtung (D) veränderlichen Überlappungsbereich haben.

15. Vorrichtung nach einem der Ansprüche 11 bis 14, **dadurch gekennzeichnet, daß** Arretierungseinrichtungen (22) für den Schlitten (21) auf der Führung und/oder für die Einrichtungen zur Veränderungen des Neigungswinkels vorhanden sind.

16. Vorrichtung nach einem der Ansprüche 1 bis 15, **dadurch gekennzeichnet, daß** auf beiden Seiten des Flachmaterials (6) entsprechende Aufladeelektroden (13) in entsprechender Zahl und Anordnung vorhanden sind.

17. Vorrichtung nach einem der Ansprüche 1 bis 16, **dadurch gekennzeichnet, daß** auf einer Seite des Flachmaterials (6) an dessen Breite anpaßbare Aufladeelektroden (13) und auf der anderen Seite des Flachmaterials (6) mindestens eine der maximalen Breite des Flachmaterials (6) fest angepaßte Aufladeelektrode (13) angeordnet ist.

18. Vorrichtung nach einem der Ansprüche 1 bis 17, **dadurch gekennzeichnet, daß** auf mindestens einer Seite des Flachmaterials (6) eine flächige Aufladeelektrode angeordnet ist, deren Breite in Querrichtung etwa der des Flachmaterials (6) und deren Länge der Aufladeelektrode in Durchlaufrichtung (D) des Flachmaterials (6) entspricht.

19. Vorrichtung nach einem der Ansprüche 1 bis 18, **dadurch gekennzeichnet, daß** die Hochspannungsversorgung für zwei Aufladeelektroden (13) gesonderte Hochspannungsgeneratoren (17) hat.

20. Vorrichtung nach einem der Ansprüche 1 bis 19, **dadurch gekennzeichnet, daß** die Hochspannungsversorgung (16) jedem Paar Aufladeelektroden (13) ein positives oder ein negatives Hochspannungspotential und ein Massepotential liefert.

21. Vorrichtung nach einem der Ansprüche 1 bis 20, **dadurch gekennzeichnet, daß** die Aufladeelektroden (13) zwischen einem Paar Steilzugwalzen (7) und einem Paar Sachwich-Walzen (5) angeordnet sind.

22. Vorrichtung nach einem der Ansprüche 1 bis 21, **dadurch gekennzeichnet, daß** die Aufladeelektroden (13) zwischen zwei Paar Sandwich-Walzen (5, 5') angeordnet sind.

23. Vorrichtung nach einem der Ansprüche 1 bis 20, **dadurch gekennzeichnet, daß** die Aufladeelektroden (13) oberhalb einer Strangzusammenführung von Teilsträngen angeordnet ist.

24. Vorrichtung nach Anspruch 23, **dadurch gekennzeichnet, daß** zwischen den Teilsträngen des Flachmaterials (6) Masseelektroden und auf der Außenseite des einen Teilstranges eine Aufladeelektrode (13) mit positivem und auf der Außenseite des anderes Teilstranges eine Aufladeelektrode (13) mit negativem Potential angeordnet ist.

25. Vorrichtung nach Anspruch 22 bis 24, **dadurch gekennzeichnet, daß** die Aufladeelektroden (13) oberhalb einem Paar Sandwich-Walzen (5) angeordnet sind.

## Claims

1. A device for electrostatically setting a multi-layer sheet material (6) with charging electrodes (13) on the two sides of a passage area (14) of the sheet material (6) and a high-voltage supply (6) connected to the charging electrodes (13), **characterized in that** the charging electrodes (13) have a multiplicity of successively arranged needles (18) in the direction of passage (D) of the sheet material (6), the extension of the area occupied by needles (18) of the charging electrodes (13) is at least 0.05 mm in the direction of passage (D) of the sheet material, the charging electrodes (13) with their area occupied by needles (18) are extended transversely to the direction of passage (D) of the sheet material (3) at least over 0.05 m each of the two edge areas of the sheet material (3), and the density of the needles (18) of the charging electrodes (13) is at least 0.5 needles per cm².

2. The device according to claim 1, **characterized in that** the charging electrodes (13) with their area occupied by needles (18) substantially cover the whole width of the sheet material (6).

3. The device according to claim 1 or 2, **characterized in that** the charging electrodes (13) produce a field strength which is larger in the edge areas of the sheet material than is in the central area of the sheet material (6).

4. The device according to any one of claims 1 to 3, **characterized in that** a plurality of charging electrodes (13) are arranged side by side on at least one side of the sheet material (6) and are extended, with their longitudinal axis, in the direction of passage of the sheet material (6).

5. The device according to claim 4, **characterized in that** the area occupied with needles (18) of the elongate charging electrodes (13) is about 0.25 m in length and/or about 0.33 m in width.

6. The device according to claims 1 to 5, **characterized in that** the density of the needles (18) of the charging electrodes (13) is about 1 to 3 needles, preferably 2 needles, per cm².

7. The device according to any one of claims 4 to 6, **characterized in that** the elongate charging electrodes (13) are arranged in parallel with each other at least over the edge areas of the sheet material (6).

8. The device according to any one of claims 4 to 7, **characterized in that** the elongate charging electrodes (13) are arranged, with their longitudinal axes, in the direction of passage (D) of the sheet material (6) at least over the edge areas of the flat material (6).

9. The device according to any one of claims 4 to 8, **characterized in that** the elongate charging electrodes (13), at least over the central area of the sheet material (6), are inclined to the direction of passage (D) thereof.

10. The device according to any one of claims 1 to 9, **characterized in that** the charging electrodes (13) are mounted on a support (19) associated with the area of passage (14) in a design, number, and arrangement adaptable to the width of the sheet material (6).

11. The device according to claim 10, **characterized in that** at least one carriage (21) is slidable transversely to the direction of passage (D) of the sheet material (6) along a guide of the support (19) and carries at least one charging electrode (13).

12. The device according to claim 11, **characterized in that** the carriage (21) carries at least one charging electrode (13') oriented in parallel with the direction of passage (D) and/or at least one charging electrode (13") inclined to the direction of passage (D).

13. The device according to claim 12, **characterized in that** the carriage (21) carries at least one charging electrode (13") inclined to the direction of passage (D) by means of a device for varying the angle of inclination of the charging electrode (13") from the direction of passage (D).

14. The device according to any one of claims 10 to 13, **characterized in that** at least two charging electrodes are adjustable in place relative to each other transversely to the direction of passage (D) of the sheet material (6) and have an overlapping area variable transversely to the direction of passage (D).

15. The device according to any one of claims 11 to 14, **characterized in that** there are detent devices (22) for the carriage (21) on the guide and/or for the devices for varying the angle of inclination.

16. The device according to any one of claims 1 to 15, **characterized in that** there are respective charging electrodes (13) in an appropriate number and arrangement on the two sides of the sheet material (6).

17. The device according to any one of claims 1 to 16, **characterized in that** on one side of the sheet material (6) wide, adaptable charging electrodes (13) are arranged and at least one charging electrode (13) firmly adapted to the maximum width of the sheet material (13) is arranged on the other side of the sheet material (6).

18. The device according to any one of claims 1 to 17, **characterized in that** a plane charging electrode is arranged on at least one side of the sheet material (6) the width of which approximately matches that of the sheet material (6), in a transverse direction, and the length of which matches that of the charging electrode in the direction of passage (D) of the sheet material (6).

19. The device according to any one of claims 1 to 18, **characterized in that** the high-voltage supply for two charging electrodes (13) has separate high-voltage generators (17).

20. The device according to any one of claims 1 to 19, **characterized in that** the high-voltage supply (16) feeds each couple of charging electrodes (13) with a positive or negative high-voltage potential and a ground potential.

21. The device according to any one of claims 1 to 20, **characterized in that** the charging electrodes (13) are arranged between a couple of steep pulling rollers (7) and a couple of sandwich rollers (5, 5').

22. The device according to any one of claims 1 to 21, **characterized in that** the charging electrodes (13) are arranged between two couples of sandwich rollers (5, 5').

23. The device according to any one of claims 1 to 20, **characterized in that** the charging electrodes (13) are arranged above a strand converging mechanism for partial strands.

24. The device according to claim 23, **characterized in that** ground electrodes are arranged between the partial strands of the sheet material (6) and a charging electrode (13) having a positive potential is arranged at the outside of one partial strand and a charging electrode (13) having a negative potential is arranged at the outside of the other partial strand.

25. The device according to claims 22 to 24, **characterized in that** the charging electrodes (13) are arranged above a couple of sandwich rollers (5).

## Revendications

1. Dispositif de fixation électrostatique d'un matériau plat (6) en plusieurs couches comportant des électrodes de charge (13) sur les deux côtés d'une zone de passage (14) du matériau plat (6) et une alimentation haute tension (16) reliée aux électrodes de charge (13),
**caractérisé en ce que** les électrodes de charge (13) comportent une multiplicité d'aiguilles (18) disposées les unes derrière les autres suivant la direction de passage (D) du matériau plat (6) ; **en ce que** l'extension de la zone, garnie d'aiguilles (18), des électrodes de charge (13) suivant la direction de passage (D) du matériau plat est au moins de 0,05 m ; **en ce que** les électrodes de charge (13) s'étendent, avec leur zone garnie d'aiguilles (18), transversalement par rapport à la direction de passage (D) du matériau plat (6), à chaque fois au moins sur 0,05 m pardessus les deux zones de bord du matériau plat (6) ; **en ce que** la densité des aiguilles (18) des électrodes de charge (13) est au moins de 0,5 aiguilles par cm².

2. Dispositif selon la revendication 1,
**caractérisé en ce que** les électrodes de charge (13), avec leur zone garnie d'aiguilles (18), recouvrent essentiellement toute la largeur du matériau plat (6).

3. Dispositif selon la revendication 1 ou 2,
**caractérisé en ce que** les électrodes de charge (13) produisent, dans les zones de bord du matériau plat (6), une intensité de champ plus grande que dans la zone centrale du matériau plat (6).

4. Dispositif selon l'une des revendications 1 à 3,
**caractérisé en ce que** plusieurs électrodes de charge (13) sont disposées les unes à côté des autres sur au moins un côté du matériau plat (6), et que leur axe longitudinal s'étend suivant la direction de passage du matériau plat (6).

5. Dispositif selon la revendication 4,
**caractérisé en ce que** la zone garnie d'aiguilles (18) des électrodes de charge oblongues (13) est longue d'environ 0,25 m et/ou large d'environ 0,33 m.

6. Dispositif selon l'une des revendications 1 à 5,
**caractérisé en ce que** la densité des aiguilles (18) des électrodes de charge (13) est d'environ 1 à 3, et de préférence de 2, aiguilles par cm².

7. Dispositif selon l'une des revendications 4 à 6,
**caractérisé en ce que** les électrodes de charge oblongues (13) sont disposées, au moins au-dessus des zones de bord du matériau plat (6), parallèlement les unes aux autres.

8. Dispositif selon l'une des revendications 4 à 7,
**caractérisé en ce que** les électrodes de charge oblongues (13) ont leurs axes longitudinaux orientés, au moins au-dessus des zones de bord du matériau plat (6), suivant la direction de passage (D) du matériau plat (6).

9. Dispositif selon l'une des revendications 4 à 8,
**caractérisé en ce que** les électrodes de charge oblongues (13) sont inclinées, au moins au-dessus de la zone centrale du matériau plat (6), par rapport à la direction de passage (D) de celui-ci.

10. Dispositif selon l'une des revendications 1 à 9,
**caractérisé en ce que** les électrodes de charge (13) sont fixées sur un support (19) associé à la zone de passage (14), leur mode de réalisation, nombre et disposition étant ajustables à la largeur du matériau plat (6).

11. Dispositif selon la revendication 10,
**caractérisé en ce qu'**un chariot (21) peut coulisser, transversalement par rapport à la direction de passage (D) du matériau plat (6), le long d'un guide du support (19), et porte au moins une électrode de charge (13).

12. Dispositif selon la revendication 11,
**caractérisé en ce que** le chariot (21) supporte au moins une électrode de charge (13',13") orientée parallèlement à la direction de passage (D) et/ou inclinée par rapport à la direction de passage (D).

13. Dispositif selon la revendication 12,
**caractérisé en ce que** le chariot (21) porte au moins une électrode de charge (13") inclinée par rapport à la direction de passage (D) au moyen d'un système permettant de faire varier l'angle d'inclinaison de l'électrode de charge (13") par rapport à la direction de passage (D).

14. Dispositif selon l'une des revendications 10 à 13,
**caractérisé en ce qu'**au moins deux électrodes de charge peuvent être déplacées l'une par rapport à l'autre, transversalement par rapport à la direction de passage (D) du matériau plat (6), et comportent une zone de chevauchement variable transversalement par rapport à la direction de passage (D).

15. Dispositif selon l'une des revendications 11 à 14,
**caractérisé en ce que** des systèmes d'arrêt (22) sont présents pour le chariot (21) sur le guide, et/ou pour les systèmes permettant de faire varier l'angle d'inclinaison.

16. Dispositif selon l'une des revendications 1 à 15,
**caractérisé en ce que** sur les deux côtés du matériau plat (6), sont présentes des électrodes de charge (13) appropriées en nombre approprié et suivant une disposition appropriée.

17. Dispositif selon l'une des revendications 1 à 16,
**caractérisé en ce que** sur un côté du matériau plat (6) sont disposées des électrodes de charge (13) ajustables à sa largeur, et sur l'autre côté du matériau plat (6) est disposée au moins une électrode de charge (13) fixement ajustée à la largeur maximale du matériau plat (6).

18. Dispositif selon l'une des revendications 1 à 17,
**caractérisé en ce que**, au moins sur un côté du matériau plat (6), est disposée une électrode de charge plane dont la largeur suivant la direction transversale équivaut à peu près à celle du matériau plat (6) et dont la longueur équivaut à celle de l'électrode de charge suivant la direction de passage (D) du matériau plat (6).

19. Dispositif selon l'une des revendications 1 à 18,
**caractérisé en ce que** l'alimentation haute tension pour deux électrodes de charge (13) comporte des génératrices haute tension (17) séparées.

20. Dispositif selon l'une des revendications 1 à 19,
**caractérisé en ce que** l'alimentation haute tension (16) fournit à chaque paire d'électrodes de charge (13) un potentiel de haute tension positif ou négatif et un potentiel de masse.

21. Dispositif selon l'une des revendications 1 à 20,
**caractérisé en ce que** les électrodes de charge (13) sont disposées entre une paire de cylindres de traction verticale (7) et une paire de cylindres-sandwich (5).

22. Dispositif selon l'une des revendications 1 à 21,
**caractérisé en ce que** les électrodes de charge (13) sont disposées entre deux paires de cylindres-sandwich (5, 5').

23. Dispositif selon l'une des revendications 1 à 20,
**caractérisé en ce que** les électrodes de charge (13) sont disposées au-dessus d'une convergence de branches partielles.

24. Dispositif selon las revendication 23,
**caractérisé en ce que**, entre les branches partielles du matériau plat (6), sont disposées des électrodes de masse et, sur le côté extérieur de l'une des branches partielles, une électrode de charge (13) à potentiel positif, ainsi que, sur le côté extérieur de l'autre branche partielle, une électrode de charge (13) à potentiel négatif.

25. Dispositif selon les revendications 22 à 24,
**caractérisé en ce que** les électrodes de charge (13) sont disposées au-dessus d'une paire de cylindres-sandwich (5).
